# EUROPEAN PATENT SPECIFICATION

(11) **EP 1 859 689 B1**
(45) Date of publication and mention of the grant of the patent: **04.05.2011**
(21) Application number: 06729215.1
(22) Date of filing: 16.03.2006
(51) Int. Cl.: A23L 1/10, C12C 5/02, C12G 3/02

(54) **METHOD OF PRODUCING PROCESSED CORN PRODUCT**
VERFAHREN ZUR HERSTELLUNG EINES PRODUKTS AUS VERARBEITETEM MAIS
MÉTHODE DE PRODUCTION D'UN PRODUIT TRANSFORMÉ DE MAÏS

(30) Priority: 18.03.2005 JP 2005080153; 15.06.2005 JP 2005175777
(43) Date of publication of application: 28.11.2007
(73) Proprietor: Suntory Holdings Limited, Kita-ku, Osaka-shi, Osaka 530-8203 (JP)
(72) Inventor: KAGEYAMA, Norihiko, 888 (JP); NAGAO, Koji, ama-shi, Kanagawa, 2210822 (JP); IZUMI, Takaaki, Kanagawa 211-0053 (JP); NAKAHARA, Koichi, saka, 5610861 (JP); KAKUDO, Yoichi, Hyogo 6590092 (JP)
(74) Representative: Vossius & Partner
(86) International application number: PCT/JP2006/305218
(87) International publication number: WO 2006/100998

(56) References cited:
- WO-A1-2004/000990
- WO-A1-2004/039936
- GB-A- 1 041 932
- JP-A- 61 254 175
- JP-A- 2002 112 718
- US-B1- 6 482 459

## Description

### TECHNICAL FIELD

The present invention relates to a method for manufacturing a processed corn product in which corn or a material obtained from corn is treated with a saturated steam of a specific temperature, and the use of the processed corn product obtained by the above method.

### BACKGROUND ART

In the alcoholic beverage and food industries, with diversification of consumers' tastes in recent years, development of alcoholic beverages and foods having a variety of features has become indispensable since adding a new taste and flavor can differentiate goods from others and enhance their competitive edge. Because of this, in order to create new flavors , development of goods that suit consumers' tastes is currently being carried out by choosing various raw materials and changing manufacturing conditions.

However, as long as existing raw materials are treated according to existing methods, even if a flavor as an extension of conventional ones can be realized by changing the treatment conditions or the like, it is generally difficult to create a completely new flavor. Therefore, for realization of a completely new flavor, it is considered necessary to process new raw materials to create a new flavor component, and technical development for this has been required.

In manufacturing beer, various products have been developed regarding existing raw materials such as malt, which has been traditionally used. For example, in order to adjust the color and flavor of beer products, malt called special malt such as melanoidin malt or caramel malt is used as one of the raw materials.

Patent Reference 1 discloses a method for producing a modified corn material which is prepared by contacting the raw material of the corn material with high temperature water at a temperature of >100 °C to 300 °C and having a pressure which is higher than the vapor pressure of water at the temperature for a time in which the high-molecular substance of the corn material is partially decomposed to a high-molecular substance lower in molecular weight than the high-molecular substance of the corn material.

Patent Reference 2 describes a method of preparing sake or shochu. In this method cereals other than rice, their pounded product, their crushed product and/or their pulverized product are prepared beforehand. The cereals are heated under pressure for up to 10 min in the presence of superheated steam having a gauge-pressure of 1 to 10 kg/cm² and a temperature of 105 to 350 °C and released to a low-pressure atmosphere to obtain gelatinized cereals. The product is used as a raw material of malt or fermentation raw material to obtain sake or shochu.

Meanwhile, in Patent Reference 3, a technology of adding flavor components such as vanillin by treating malt or the like at a high temperature and a high pressure is described.

Moreover, in Patent Reference 3, it is described that by treating grains or a processed material thereof at a high temperature and a high pressure, a processed product increased in formation of vanilla flavor components such as vanillin can be obtained and that foods and drinks with a good vanilla flavor can be produced using this processed material. Although this method is a remarkably superior method to add the flavor component to foods or drinks, there were further problems to be solved in order to produce foods or drinks suppressed in flavor components but increased in richness and stimulatory components.

Recently in Japan, alcoholic beverages, especially fermented beverages such as beer are classified according to tax categories of the liquor tax law based on used raw materials, and for example, there exist regulations that the ratio of used malt is 66.7% or more in the case of beer and that the ratio of used malt is less than 25% in the case of happoshu (low-malt-beer) most commonly distributed on the market. Under these regulations, for example, a beer-taste beverage in which malt is not used is being sold, but it is far inferior to beer and happoshu in terms of flavor, thin and light flavor without thickness in particular, and so there remained such problems that flavor to satisfy consumers could not be designed.

Patent Reference 1: JP 2002-112718

Patent Reference 2: JP 61-254175]

Patent Reference 3: WO2004/039936

### DISCLOSURE OF THE INVENTION

### PROBLEMS TO BE SOLVED BY THE INVENTION

The present invention aims to provide a manufacturing method of a processed corn product or a composition containing a processed corn-pericarp product capable of adding a superior flavor and richness and thickness to food or beverage in order to satisfy consumers' various tastes. The present invention also aims to provide food or drink in which the processed corn product or the composition containing a processed corn-pericarp product is used as the raw material and which has superior flavor and richness and thickness, especially a low-carbohydrate beer-taste fermented beverage in which no malt is used.

### MEANS FOR SOLVING THE PROBLEMS

As a result of keen investigations to achieve the objects, the inventors found out that the composition containing a processed corn-pericarp product obtained by blending a processed corn product obtained by treating corn or a material obtained from corn in saturated steam of 170°C to 200°C under an oxygen concentration of 0 to 1 µg/mL, and a processed corn-pericarp product obtained by treating corn pericarp or a mixture of corn pericarp and corn grits in saturated steam of 170°C to 200°C under an oxygen concentration of 0 to 1 µg/mL, with corn or its processed material, can suppress formation of a characteristic flavor such as vanillin and add a superior flavor, richness and thickness to food or beverage, and have completed the present invention after further examination.

That is to say, the present invention relates to:
(1)a method for manufacturing a processed corn product, which is characterized by that corn or a material obtained from corn is treated with saturated steam of 170°C to 200°C under an oxygen concentration of 0 to 1 µg/mL;
(2) the method according to the above-mentioned (1), wherein the material obtained from corn contains corn pericarp;
(3) the method according to the above-mentioned (1), wherein the material obtained from corn is corn pericarp;
(4) the method according to the above-mentioned (1), wherein the material obtained from corn is a mixture of corn pericarp and corn grits;
(5) the method according to (1), wherein the temperature of the saturated steam is 180°C to 200°C;
(6) food or drink which is obtainable by using the processed corn product obtainable by the method according to any one of the above-mentioned (1) to (5) as a raw material;
(7) a method for manufacturing a composition containing a processed corn-pericarp product, which is characterized in that corn pericarp or a mixture of corn pericarp and corn grits is treated with saturated steam of 170°C to 200°C under an oxygen concentration of 0 to 1 µg/mL and that the thus obtained product is compounded into corn or a material obtained from corn;
(8) the method according to the above-mentioned (7), wherein the corn or the material obtained from corn is cornstarch or a decomposed material thereof, corn protein or a decomposed material thereof, or corn grits;
(9) food or drink which is obtainable by using the composition containing a processed corn-pericarp product obtainable by the method according to the above-mentioned (7) or (8);
(10) the food or drink according to the above-mentioned (6) or (9), wherein the food or drink is a grain brewed beverage;
(11) the food or drink according to the above-mentioned (10), wherein the grain brewed beverage is a non-malt fermented beverage;
(12) the food or drink according to the above-mentioned (6) or (9), wherein the food or drink is a beer-taste fermented beverage;
(13) the food or drink according to the above-mentioned (12), wherein the beer-taste fermented beverage is a low-carbohydrate or low-calorie beer-taste fermented beverage;
(14) the food or drink according to the above-mentioned (6) or (9), wherein the food or drink is a low-carbohydrate fermented beverage;
(15) the food or drink according to the above-mentioned (14), wherein the low-carbohydrate fermented beverage is a low-carbohydrate beer-taste fermented beverage;
(16) a method for manufacturing a low-carbohydrate beer-taste fermented beverage, which is characterized in that a carbon source, a nitrogen source, and the processed corn product obtainable by the method according to any one of the above-mentioned (1) to (7) and/or the composition containing a processed corn-pericarp product obtainable by the method according to the above-mentioned (7) or (8) are added into water, and further hops or a processed product thereof is added and mixed, and then the obtained mixture is boiled to prepare a fermentation raw material liquid, and yeast is added to the fermentation raw material liquid, and fermentation is carried out to obtain a fermentation liquid, and the fermentation liquid is diluted by adding water; and
(17) the method according to the above-mentioned (16), wherein the carbon source is a saccharide syrup and the nitrogen source is a corn protein hydrolysate.

### EFFECTS OF THE INVENTION

The manufacturing method of the present invention provides an industrially advantageous manufacturing of a processed corn product and a composition containing a processed corn-pericarp product capable of adding a good flavor and richness and thickness to food or beverage. In addition, the food or beverage of the present invention have a good flavor and richness and thickness.

### DESCRIPTION OF THE PREFERRED EMBODIMENTS

### (Manufacturing method of processed corn product)

The manufacturing method of the processed corn product of the present invention is characterized in that corn or a material obtained from corn is treated in saturated steam of 170°C to 200°C under an oxygen concentration of 0 to 1 µg/mL.

The corn may be used in whole-grain form as it is.

As materials obtained from corn, fractions to which corn is fractionated in the usual manner can be mentioned, and a product obtained by treating each fraction can also be mentioned as an example of a material obtained from corn. In the present invention, a material obtained from corn is preferably pericarp or a fraction containing pericarp. Also, in the present invention, for example, a mixture of pericarp and a material obtained from corn other than pericarp at an appropriate proportion may be used as the material obtained from corn. The material obtained from corn other than pericarp mentioned here can be, for example, the inner fraction, corn grits, corn starch, or corn protein. Since corn pericarp shows remarkable improvement in richness and stimulus sensation when treated by saturated steam at high temperature and high pressure for example, it is preferable to use corn as it is, corn pericarp, a material obtained from corn containing corn pericarp, and a mixture of corn pericarp and corn grits as corn or a material obtained from corn in the present invention. In the case a mixture of pericarp and a material obtained from corn other than pericarp is used as the material obtained from corn, although a mixing ratio is not particularly limited, it is preferable that the mixing ratio of pericarp to the whole mixture is around 10 to 99 wt%.

To fractionate corn into pericarp and the inner fraction (that is, the remaining part of corn from which pericarp has been removed), the fractioning method is not particularly limited. For example, pericarp can be separated using a mill or by fractionating drymilled corn powder with a sieve, and the obtained fraction may be used as the material obtained from corn.

To obtain corn pericarp, for example, a pericarp fraction obtained as a by-product in manufacturing corn starch or corn protein may be used after purification and drying if necessary.

Moreover, a material obtained from corn other than pericarp (for example, corn grits, corn starch, corn protein or the like) can be obtained by the ordinary method. In addition, a commercially available product may be used as the material obtained from corn other than pericarp. Corn grits are dried and dry-milled corn from which germ and rhytidome have been removed.

For the above corn or the material obtained from corn, a crushing process can be added before saturated steam treatment. This enables homogeneous treatment, produces a homogeneous processed corn product, and furthermore makes shape forming of the processed corn product easier.

In the manufacturing method of the processed corn product of the present invention, the above corn or a material obtained from corn is treated in saturated steam of 170°C to 200°C under an oxygen concentration of 0 to 1 µg/mL (hereinafter, this treatment is referred to as saturated steam treatment).

As the saturated steam, steam of a liquid such as distilled water, demineralized water, tapwater, alkalineionwater, deepseawater, ion-exchange water, deoxygenated water, and water containing a soluble organic compound (for example, an alcohol or the like) or an inorganic salt can be mentioned, however, it is not limited to these.

As examples water vapor, alcohol steam or the like can be mentioned. Saturated water vapor, is preferred from the viewpoints of workability and operability.

The temperature of the fluid in saturated steam treatment is not particularly limited as long as it is 170°C to 200°C. In the present invention, within the above temperature range, 180°C to 200°C is preferable. If the treatment temperature is lower than 170°C, there is less enhancing effect of the component to contribute to adding richness and stimulus sensation, and if it is higher than 200°C, the amount of produced vanillin rapidly increases and the vanilla flavor is strengthened. In some cases, depending on the flavor design, this strong vanilla flavor may make the raw material unsuitable for a fermented beverage.

Also, in the present invention, the saturated steam treatment is preferably carried out under increased pressure. The pressure of the saturated steam during treatment is preferably about 0.1 to 2. 2 MPa. Moreover, in the present invention, the pressure is preferably a saturated water vapor pressure. Herein, the "pressure" means a "gauge pressure". Therefore, for example, "a pressure of 0.1 MPa" is converted into an absolute pressure of the atmospheric pressure plus 0.1 MPa. Within this range (about 0.1 to 2.2 MPa), while formation of the vanilla flavor is suppressed, richness and stimulus sensation can be added to the treated product. More preferably, the above pressure is about 0.2 to 1.4.MPa.

Treatment time in the saturated steam treatment is preferably about 1 second to 60 minutes, more preferably about 3 seconds to 30 minutes. For example, in the case where the treatment temperature is 190°C, the treatment time is preferably 30 seconds to 90 seconds. Within this preferable range, there is an effect that input energy can be further reduced and availability ratio of facilities can be increased.

Oxygen concentration in the saturated steam treatment is an oxygen concentration of 0 to 1 µg/mL. In the present invention, such a low-oxygen state can be made by using a publicly known means. For example, the said low-oxygen state can be obtained by using a deaerated (deprived of air) liquid as the saturated steam to be used for the above saturated treatment. Or alternatively, in place of the deaerated liquid, a liquid to which a material capable of removing oxygen is added beforehand, or the like, can also be used.

In addition, before the above treatment, also by substituting inside the treatment atmosphere with a gas of an oxygen concentration of 0 to 1 µg/mL, the above low-oxygen state can be obtained. Here, although the gas of an oxygen concentration of 0 to 1 µg/mL is not particularly limited, an inert gas such as nitrogen, carbon dioxide, or a deaerated gas is preferable. As the deaerated gas, a gas obtained by boiling a deaerated liquid and the like can be mentioned. The oxygen concentration during the above treatment can be measured by a publicly known method, and for example, it can be measured by an ordinary dissolved oxygen meter (DO meter).

In the present invention, a publicly known treatment can be further added to the above saturated steam treatment. As the publicly known treatment, for example, crushing, extraction (including supercritical extraction), drying (vacuum drying or the like) and the like can be mentioned, but it is not limited to these.

After the saturated steam treatment, furthermore, a drying process can be added, which is explained here. In the case the treated material is left as it is after the saturated steam treatment, since starch is gelatinized and hardened when cooled, a lot of energy is needed in the next crushing process. In order to make the treated material easier to handle, it is preferable to add a drying process for easier crushing. As a method for that, for example, a rapid-drying method in which the pressure is rapidly reduced to vapor water in a short time after the saturated steam treatment can be mentioned. By this method, as the composition becomes sponge-like due to rapid reduction of the pressure, the problem of hard composition found in the ordinary drying can be solved. By this drying process, later dissolution and crushing also become easy. By positively adding this drying process, the obtained processed corn product becomes easier to utilize in the next process than in the case of natural drying.

Moreover, in the drying process, the saturated steam-treated material can be formed into an arbitrary shape in combination with an extrusion or extraction means and also a cutting means if desired. As the shape, a stick shape, a column shape, a spherical shape, a polygonal column shape, a polyhedron shape and the like can be mentioned, and a desired shape can be obtained by the above method. Moreover, the water content of the processed corn product can be manipulated at this time

A device to be used for the saturated steam treatment or the like of the present invention is not particularly limited, and any device can be used as long as it has a structure that can stand temperatures of 170°C to 200°C. For example, as the above device, a device in which a pressure-resistant reaction container and a heating unit are combined can be mentioned. In such a device, a liquid or a gas heated by the heating unit becomes a liquid or a gas on a high temperature and high pressure state, and is sent into the reaction container. Any heating device can be used as long as it has a thermal capability. For example, heating by electricity, oil, coal, gas, solar heat, geothermal heat, or the like can be mentioned, but it is not limited to these. Moreover, the above unit may be a kind of a mere heat-and-pressure-resistant pipe. Although any material will do for the reaction container or the pipe as long as it has pressure resistance and heat resistance, the preferred material is the one that does not make any metal constituent or the like leak out of it, does not form any poisonous material, and does not produce any unpleasant smell. As the said material, a material such as stainless steel is preferable so as to prevent unnecessary reaction, erosion or deterioration, but it is not limited to this.

In the case where the above described treatment device is used, it is preferable to substitute inside the container of the treatment device with a gas of an oxygen concentration of 0 to 1 µg/mL before the saturated steam treatment.

As a preferable device to efficiently carry out the present invention, an extruder can be used. With this device, operation after the above treatment becomes remarkably easy. An extruder is a device often used for manufacturing bulked foods or the like, and for example, a device that heats and pressurizes the raw material while mixing and extracting it out of a die at a high temperature and high pressure by a biaxial, multiaxial or uniaxial screw placed in an extraction cylinder, can be mentioned. In the present invention, the biaxial type capable of stable treatment is more preferable. By using such an extruder, continuous treatment becomes possible, and moreover, after the treatment, if the treatment atmosphere is rapidly opened from high pressure to low pressure, water can vaporize, and in addition, by appropriately choosing the shape of the die as described above, treated material formed into a desired shape can be obtained. In this case, since the treated material is bulked, there is a merit that the treated material can easily be dissolved in a liquid such as water if necessary. Aside from these devices, any device will do as long as the above conditions of the present invention can be realized.

### (Manufacturing of composition containing processed corn-pericarp product)

In the present invention, a composition containing a processed corn-pericarp product can be manufactured by treating corn pericarp or a mixture of corn pericarp and corn grits in saturated steam of 170°C to 200°C under an oxygen concentration of 0 to 1 µg/mL and blending the obtained corn-pericarp product with corn or a material obtained from corn that has not undergone the saturated steam treatment. Since the composition containing a processed corn-pericarp product obtained in this way contains a fraction that has not undergone the saturated steam treatment, it can be widely used for alcoholic beverages made from corn.

As the corn or a material obtained from corn that has not undergone the said saturated steam treatment, for example, the above corn or a product similar to the obtained material thereof can be mentioned, and especially, corn starch or its decomposition product, corn protein or its decomposition product, or corn grits are preferable.

Although the blending proportion of the processed corn-pericarp product in the composition containing the processed corn-pericarp product varies with the food or drink or the like, and it is not particularly restricted, in the case the composition containing a processed corn-pericarp product is obtained as the raw material of a non-malt fermented beverage, for example, a blending quantity of the processed corn-pericarp product is preferably 0.001 to 30 wt%, and more preferably 0.1 to 10 wt% to the whole composition.

### (Manufacturing of food or drink)

In the present invention, by using the above processed corn product and/or the above composition containing a processed corn-pericarp product as a part or the whole of the raw material, food or drink can be manufactured according to the ordinary method. As the food or drink, drinks are preferable. As a preferable drink in the present invention, for example, a grain brewed beverage can be mentioned.

The above grain brewed beverage refers to a brewed beverage manufactured by using the above processed corn product and/or the composition containing a processed corn-pericarp product as the whole or a part of the raw material. As such a brewed beverage, for example, a non-malt fermented beverage can be mentioned as a suitable example. The non-malt fermented beverage refers to a fermented beverage manufactured without using malt as the raw material. The use ratio of the processed corn product or the composition containing a processed corn-pericarp product in the raw material of the non-malt fermented beverage is not particularly restricted, and can be set according to the use amount of the other raw materials.

Moreover, the above food or drink is preferably a beer-taste fermented beverage. The above beer-taste fermented beverage is a beverage in which a carbon source, a nitrogen source, and hops or the like are used as the raw materials and fermented by yeast, and refers to a beverage having a beer-like savor. The above beer-taste fermented beverage may be manufactured according to the ordinary method by using the above processed corn product and/or the composition containing a processed corn-pericarp product, and normally undergoes
(I-1) a process of obtaining a saccharified solution by adding the above processed corn product and/or the above composition containing a processed corn-pericarp product to grain such as malt, barley, rice or corn and saccharifying it, and furthermore, if desired, adding hops or a processed product thereof to prepare a fermentation raw material liquid, or
(I-2) a process in which the processed corn product and/or the composition containing a processed corn-pericarp product is/are added to a sugar solution of saccharide itself such as a saccharide syrup to prepare a fermentation raw material liquid with further addition of hops or a processed product thereof if desired, and
(II) a process in which yeast is added to the fermentation raw material liquid to ferment it, and there is also a case where protein derived from a plant other than malt or a hydrolysate thereof is employed as a nitrogen source. As a kind of the beer-taste fermented beverage, for example, beer, happoshu, miscellaneous liquors, liqueurs, spirits, low alcohol fermented beverages (for example, fermented malt beverages of which the alcoholic content is less than 1%) and the like can be mentioned.

Moreover, it is preferable that the food or drink is a low-carbohydrate fermented beverage. The term "low-carbohydrate" means that the glucide concentration in the fermented beverage is less than 0.8 wt%, especially less than 0.5 wt% in terms of solid content. As a kind of the preferable low-carbohydrate fermented beverages, for example, Japanese refined sake, wine, beer, happoshu, miscellaneous liquors, liqueurs, spirits, beer-taste fermented beverages and the like can be mentioned, and among them, happoshu and beer-taste fermented beverages are preferable, and beer-taste fermented beverages are more preferable. In addition, the low-carbohydrate fermented beverage can be prepared using the processed corn product and/or the composition containing a processed corn-pericarp product as a raw material in a conventional method, but it is especially preferable to produce the low-carbohydrate fermented beverage in the following method.

### (Manufacturing method of preferable low-carbohydrate fermented beverage)

In the present invention, the preferable low-carbohydrate fermented beverage is produced by preparing the fermentation raw material liquid containing the processed corn product and/or the composition containing a processed corn-pericarp product and further containing hops or a processed product thereof if desired (process of preparing fermentation rawmaterial liquid), preparing the fermentation liquid by fermenting the fermentation raw material liquid by adding yeast thereto (fermentation process), diluting the fermentation liquid by adding water thereto (dilution process), and then adding an alcohol if desired (process of adjusting alcohol concentration).

### (Process of preparing fermentation raw material liquid)

In this process, a carbon source, a nitrogen source and other desired components are added to preparation water and then the mixture is stirred and mixed, the processed corn product and/or the composition containing a processed corn-pericarp product is/are added to the obtained mixed liquid, hops or a processed product thereof is further added if desired, and a fermentation raw material liquid is prepared by boiling the mixed liquid. In the case hops or a processed product thereof is added, a low-carbohydrate beer-taste fermented beverage can be manufactured.

As the above carbon source, for example, a publicly known saccharified solution or a publicly known carbohydrate solution can be mentioned, and more concretely, carbohydrated starch and saccharide syrup can be mentioned.

As the above nitrogen source, for example, a protein decomposition product of grain or the like can be mentioned, and among them, a corn protein decomposition product is preferable. As the above corn protein decomposition product, for example, a corn protein hydrolysate and the like can be mentioned.

As other components used together with the carbon source and the nitrogen source, for example, a yeast growth fermentation aid, a pigment, a foam forming agent, a flavor, a water soluble food fiber, a food additive and the like can be mentioned.

As the yeast growth fermentation aid, for example, yeast extract, a bran component of such as rice or wheat, a vitamin, a mineral agent and the like can be mentioned, and among them, yeast extract is preferable. The yeast extract also works as the nitrogen source.

As the pigment, for example, a caramel pigment and the like can be mentioned.

As the foam forming agent, for example, plant extract saponin substances such as soya saponin and quillai saponin and protein substances such as bovine blood serum albumin and the like can be mentioned.

As the flavor, for example, a flavor having a beer savor is used.

As the water soluble food fiber, for example, indigestible dextrin, polydextrose, and water soluble corn fiber and the like can be mentioned.

As the food additive, for example, a sour agent, a sweetener, a bitter agent and the like for adding a beer-like taste can be mentioned.

As the hops or the processed product thereof, for example, pellet hops, powder hops, hop extract, isohop, hexahop, tetrahop and the like can be mentioned.

Although the blending proportion of the carbon source to the above fermentation raw material liquid is not particularly restricted as long as it does not prevent the object of the present invention, it is preferably 2 to 20 wt%, and more preferably 8 to 14 wt%.

Although the blending proportion of the nitrogen source to the above fermentation raw material liquid is not particularly restricted as long as it does not prevent the object of the present invention, it is preferably 0. 01 to 10 wt%, and more preferably 0.1 to 1 wt%.

Although the blending proportion of the above processed corn product and/or the above composition containing a processed corn-pericarp product to the fermentation raw material liquid is not particularly restricted as long as it does not prevent the object of the present invention, it is preferably 0.001 to 1 wt%, and more preferably 0.01 to 0.1 wt%.

Although the blending proportion of the hop or the processed product thereof to the fermentation raw material liquid is not particularly restricted as long as it does not prevent the object of the present invention, it is preferably 0.001 to 1 wt%, and more preferably 0.01 to 0.1 wt%.

### (Fermentation process)

In this process, fermentation liquid is prepared by adding yeast to the fermentation raw material liquid obtained in the above fermentation raw material liquid preparation process and fermenting it.

The yeast used for fermentation in this process can be freely chosen in consideration of the kind of the fermented beverage to be manufactured, the target flavor and fermentation conditions or the like. For example, in the case of manufacturing low-calorie beer, sparkling liquor or a beer-taste fermented beverage, beer-brewing yeast can be used.

### (Dilution process)

In this process, in the case of a low-carbohydrate fermented beverage, the fermentation liquid obtained in the above fermentation process is diluted with water if necessary. Although this dilution factor is not restricted since it is appropriately set according to the desired carbohydrate concentration, raw material, beverage form or the like, for example, it is two-fold to ten-fold.

Dilution in this process is carried out with water, and in order to complement insufficient taste substances, a sour agent, a sweetener, a bitter agent, a water soluble food fiber or an alcohol may be added together with the dilution water.

### (Alcohol concentration adjustment process)

In the case of a low-carbohydrate fermented beverage, in this process, the diluted solution obtained in the above dilution process can also be diluted with alcohol to adjust the solution to the desired alcohol concentration if necessary.

An alcohol used in this process is not particularly restricted as long as it is an ordinarily-used alcohol in this field, and normally a brewing alcohol is used.

A low-carbohydrate fermented beverage can be obtained by the above described dilution process or the alcohol concentration adjustment process.

Moreover, the above food or drink is preferably a low-calorie beverage, and especially a low-calorie beer-taste fermented beverage is more preferable. Although the above low-calorie beverage can be prepared according to the ordinary method, above all, it is good to prepare the beverage by using a method for preparing a low-carbohydrate and/or low alcohol beverage.

The above low-carbohydrate or low-calorie beer-taste fermented beverage is preferably drunk because taste deterioration, which has been a problem of the conventional low-carbohydrate or low-calorie beer-taste fermented beverage, is suppressed in it.

In manufacturing of the beverage of the present invention, further component adjustment can be performed by using raw materials other than corn in combination. Moreover, various kinds of enzymes including a diastatic enzyme may be added separately if necessary. Alternatively, it can be combined with a raw material such as glycosylated starch which is already glycosylated. Furthermore, by setting conditions for crushing, glycosylation, wort filtration, boiling, and fermentation in accordance with the raw material in which component adjustment has been done like this, further fine adjustments can be carried out.

### EXAMPLES

Hereinbelow, the present invention will be described with reference to Examples, but the present invention is not limited to these Examples.

### <Test Example 1: Evaluation of processed corn product>

The influence of temperature conditions and treatment time on the processed corn product (processed whole-grain corn product, processed inner fractionated corn product, and processed corn-pericarp product) was examined. As for the corn, commercially available whole grain was used.

A high-temperature and high-pressure steam treatment test machine (Hisaka Works Co., Ltd.: HTS-25/140-8039) and a high pressure steam boiler (Miura Co., Ltd.: FH-100) were used for processing. Two kilograms of the whole-grain corn was put into a basket of 12 L made of SUS 316 alloy, and sealed into a heat resistant and pressure resistant container (30 L) made of SUS 316 alloy. By sending high temperature and high pressure saturated steam (2.7 MPa, 230°C) generated by using water (oxygen concentration 0.3 µg/mL) from which oxygen had been removed with an oxygen removing device (Miura Co. , Ltd. : DOR-1000P) for about one second, air inside the container was substituted.

Subsequently, under respective temperature conditions from 0.5 MPa at 160°C to 3.2 MPa at 240°C, a high temperature and high pressure treatment was performed for 60 seconds. In addition, the temperature condition was set to 0.9 MPa at 190°C to carry out the high temperature and high pressure treatment under respective conditions of treatment time of 30 to 180 seconds. In each case, after deaeration, the reaction container was made and kept vacuous for 30 minutes to perform vacuum drying to obtain a processed corn product.

Moreover, a processed corn-inner-fraction product and a processed corn-pericarp product were respectively obtained in the same manner as above described except that instead of 2 kg of whole-grain corn, 2 kg of corn inner fraction or 1 kg of corn pericarp was used.

Sensory evaluations of the obtained processed whole-grain corn product, processed corn-inner-fraction product, and processed corn-pericarp product were respectively carried out in accordance with the following evaluation methods. The results are shown in Tables 1 and 2.

### <Evaluation Method>

### (Sensory evaluation)

The sensory evaluations of respective samples were carried out by the following methods. As evaluation items, presence or absence of scorched flavor, vanilla flavor, caramel flavor, and smell of grain was evaluated. The sensory evaluations of the respective samples were conducted using 30 panelists. Respective evaluation items were evaluated on two scales of "not feel" or "feel", and each number of panelists who sensed the smell was shown.

**(Table 1)**

| | | Untreated | 160°C | 170°C | 180°C | 190°C | 200°C | 210°C |
|---|---|---|---|---|---|---|---|---|
| Processed whole-grain corn product | Scorched flavor | 0 | 3 | 3 | 5 | 7 | 20 | |
| | Vanilla flavor | 0 | 0 | 1 | 1 | 3 | 3 | |
| | Caramel flavor | 0 | 0 | 3 | 9 | 9 | 17 | |
| | Smell of grain | 9 | 9 | 6 | 4 | 1 | 0 | |
| Processed corn-innerfraction product | Scorched flavor | 0 | 0 | 1 . | 5 | 11 | 26 | |
| | Vanilla flavor | 0 | 0 | 0 | 1 | 1 | 3 | |
| | Caramel flavor | 0 | 6 | 6 | 8 | 9 | 19 | |
| | Smell of grain | 11 | 11 | 3 | 0 | 0 | 0 | |
| Processed: corn-pericarp product | Scorched flavor | 0 | 0 | 0 | 1 | 5 | 13 | 27 |
| | Vanilla flavor | 0 | 0 | 1 | 6 | 8 | 16 | 22 |
| | Caramel flavor | 0 | 0 | 2 | 4 | 4 | 12 | 19 |
| | Smell of grain | 21 | 20 | 15 | 8 | 4 | 1 | 0 |

**(Table 2)**

| | | Untreated | 30 seconds | 60 seconds | 120 seconds | 180 seconds |
|---|---|---|---|---|---|---|
| Processed whole-grain corn product | Scorched flavor | 0 | 3 | 4 | 16 | |
| | Vanilla flavor | 0 | 1 | 3 | 8 | |
| | Caramel flavor | 0 | 2 | 6 | 9 | |
| | Smell of grain | 19 | 6 | 0 | 0 | |
| Processed corn-innerfraction product | Scorched flavor | 0 | 1 | 9 | 15 | |
| | Vanilla flavor | 0 | 0 | 3 | 5 | |
| | Caramel flavor | 0 | 4 | 10 | 10 | |
| | Smell of grain | 16 | 6 | 0 | 0 | |
| Processed corn-pericarp product | Scorched flavor | 0 | 4 | 8 | 21 | 22 |
| | Vanilla flavor | 0 | 2 | 6 | 22 | 28 |
| | Caramel flavor | 0 | 2 | 9 | 22 | 26 |
| | Smell of grain | 18 | 11 | 5 | 0 | 0 |

When treatment temperature was equal to or higher than 210°C, the sensory evaluations resulted in that the vanilla flavor and scorched flavor became extremely strong. Moreover, when the treatment temperature was less than 170°C, the smell of grain was fell.

When temperature was set at 190°C, vanilla flavor, scorched flavor and the smell of grain were especially less in the treatment time range of 30 to 90 seconds, and the product was excellent.

### <Test Example 2: Evaluation of non-malt fermented beverage using processed corn-pericarp product>

The processed corn-pericarp product (treated for 60 seconds at 190°C) obtained in the above Test Example 1 was used as a raw material to produce a non-malt fermented beverage in a conventional method. That is, the processed corn-pericarp product obtained in the method described in Test Example 1 was used at a rate of 0.01% to the preparation liquid to obtain a non-malt fermented beverage. Concretely, 10 kg of commercial saccharide syrup, 200 g of commercial yeast extract, 200 g of commercial corn-protein hydrolysate, and 40 g of commercial caramel were added to 90 kg of the preparation liquid and the mixture was stirred. 10 g of the processed corn-pericarp product was measured to be added to this sugar liquid. About 50 g of hops was also added, and then the sugar liquid was boiled for about one hour at 100°C. After cooling it to 12°C, about 400 g of beer-brewing yeast was added to ferment the liquid at 12°C for two weeks, and a fermented beverage (product of the present invention) was obtained. Moreover, instead of the processed corn-pericarp product, the same amount of unprocessed corn pericarp was added to produce a non-malt fermented beverage (contrast) in the same manner as a comparison product.

In addition, sensory evaluations of the respective fermented beverages were conducted using 100 panelists selected at random, and evaluations on four scales of 0 (not feel) to 3 (strongly feel) were carried out for respective items of body, robustness, briskness, and beer taste, and the respective items were evaluated by the average value thereof. The results are shown in Table 3.

**(Table 3)**

| | | Fermented beverage | |
|---|---|---|---|
| | | Comparison product | Product of present invention |
| Sensory evaluation | Body | 1.1 | 1.9 |
| | Robustness | 1.2 | 1.8 |
| | Briskness | 1.0 | 1.9 |
| | Beer taste | 0.9 | 2.1 |

The sensory evaluations resulted in that the points of the evaluation items such as body and robustness were significantly improved as compared with the comparison product, and beer taste was further improved. Employing the processed corn-pericarp product added body and robustness to the non-malt fermented beverage, and gave an excellent beer taste to it.

### <Test Example 3: Evaluation of fermented beverage using processed corn-pericarpproduct>

The processed corn-pericarp product (treated for 60 seconds at 190°C) obtained in the above Test Example 1 was used as a raw material to produce a non-malt fermented beverage in a conventional method. That is, the processed corn-pericarp product obtained in the method described in Test Example 1 was used at a prescribed ratio to the preparation liquid to obtain the fermented beverage. Concretely, 10 kg of commercial saccharide syrup, 200 g of commercial yeast extract, 200 g of commercial corn-protein hydrolysate, and 40 g of commercial caramel were added to 90 kg of the preparation liquid and the mixture was stirred. 5 g, 10 g, 50 g, and 100 g of the processed corn-pericarp product were respectively measured to be added to this sugar liquid. About 50 g of hops was also added, and then the sugar liquid was boiled for about one hour at 100°C. After cooling it to 12°C, about 400 g of beer-brewing yeast was added to ferment the liquid at 12°C for two weeks, and a fermented beverage was obtained. Moreover, a fermented beverage to which only the processed corn-pericarp product was not added was produced in the same manner.

In addition, sensory evaluations of the respective fermented beverages were conducted using 100 panelists selected at random, and evaluations on four scales of 0 (not feel) to 3 (strongly feel) were carried out for respective items of body, robustness, briskness, and beer taste, and the respective items were evaluated by the average value thereof. The results are shown in Table 4.

**(Table 4)**

| | | Fermented beverage A | Fermented beverage B | Fermented beverage C | Fermented beverage D | Fermented beverage E |
|---|---|---|---|---|---|---|
| Added amount | % | 0.000 | 0.005 | 0.010 | 0.050 | 0.100 |
| Sensory evaluation | Body | 1.1 | 1.3 | 1.9 | 2.2 | 2.0 |
| | Robustness | 1.2 | 1.6 | 1.8 | 2.1 | 2.1 |
| | Briskness | 1.0 | 1.5 | 1.9 | 2.2 | 1.4 |
| | Beer taste | 0.9 | 1.8 | 2.1 | 2.3 | 1.8 |

The sensory evaluations resulted in that the points of the evaluation items such as body and robustness were significantly improved in the products of the present invention as compared with the fermented beverage without addition of the processed corn-pericarp product, and beer taste was further improved. Employing the processed corn-pericarp product added body and robustness to the non-malt fermented beverage, and gave an excellent beer taste to it. This effect was given even when the added amount of the processed corn-pericarp product was 0.005%, and the excellent effect was found up to the added amount of 0.05%. When 0.1% of the processed corn-pericarp product was added, effects such as body and beer taste were given, but briskness was slightly bad. As a result, the evaluation became a little lower.

### <Test Example 4: Evaluation of fermented beverage using processed corn-pericarp product>

80 pts. wt. of fractionated corn pericarp and 20 pts. wt. of commercially available corn grits for brewing were mixed to be made into a material obtained from corn. The obtained material was saturated steam-treated (treated for 60 seconds at 190°C) in accordance with the method described in Test Example 1 to obtain a processed corn-pericarp product. The obtained processed corn-pericarp product was used as a raw material to produce a fermented grain beverage in a conventional method. That is, the processed corn-pericarp product was used at a rate of 0.01% to the preparation liquid to obtain a fermented grain beverage. Concretely, 10 kg of commercial saccharide syrup, 200 g of commercial yeast extract, 200 g of commercial corn-protein hydrolysate, and 40 g of commercial caramel were added to 90 kg of the preparation liquid and the mixture was stirred. 10 g of the processed corn-pericarp product was measured to be added to this sugar liquid. About 50 g of hops was also added, and then the sugar liquid was boiled for about one hour at 100°C. After cooling it to 12°C, about 400 g of beer-brewing yeast was added to ferment the liquid at 12°C for two weeks , and a fermented beverage was obtained. Moreover, instead of the processed corn-pericarp product, the same amount of the said material obtained from corn that had not undergone high temperature and high pressure treatment was added to produce a similar fermented beverage in the same manner as a comparison product.

In addition, sensory evaluations of the respective fermented beverages were conducted using 100 panelists selected at random, and evaluations on four scales of 0 (not feel) to 3 (strongly feel) were carried out for respective items of body, robustness, briskness, and beer taste, and the respective items were evaluated by the average value thereof. The results are shown in Table 5.

**(Table 5)**

| | | Fermented beverage | |
|---|---|---|---|
| | | Comparison product | Product of present invention |
| Sensory evaluation | Body | 1.1 | 2.2 |
| | Robustness | 1.2 | 2.1 |
| | Briskness | 1.0 | 1.9 |
| | Beer taste | 0.9 | 2.3 |

The sensory evaluations resulted in that the points of the evaluation items such as body and robustness were significantly improved as compared with the comparison product, and beer taste was further improved. Employing the processed corn-pericarp product added body and robustness to the non-malt fermented beverage, and gave an excellent beer taste to it.

### <Test Example 5: Evaluation of low-carbohydrate and low-calorie fermented beverage using processed corn-pericarp product>

80 pts. wt. of fractionated corn pericarp and 20 pts. wt. of commercially available corn grits for brewing were mixed to be made into a material obtained from corn. The material obtained from corn was saturated steam-treated (treated for 60 seconds at 190°C) in accordance with the method described in Test Example 1 to obtain a processed corn-pericarp product. The obtained processed corn-pericarp product was used as a raw material to produce a low-carbohydrate fermented beverage in a conventional method. That is, the processed corn-pericarp product was used at a rate of 0.02% to the preparation liquid to obtain a fermented grain beverage. More concretely, 10 kg of commercial saccharide syrup, 200 g of commercial yeast extract, 200 g of commercial corn-protein hydrolysate, and 160 g of commercial caramel were added to 90 kg of the preparation liquid and the mixture was stirred. 20 g of the processed corn-pericarp product was measured to be added to this sugar liquid.

About 170 g of hops was also added, and then the sugar liquid was boiled for about one hour at 100°C. After cooling it to 12°C, about 400 g of beer-brewing yeast was added to ferment the liquid at 12°C for two weeks, and a fermented liquid was obtained. The obtained fermented liquid was four-fold-diluted with water to obtain a low-carbohydrate fermented beverage. The glucide concentration in the low-carbohydrate fermented beverage was 0.46 wt% in terms of solid content, and the caloric value was 12 kcal. Moreover, instead of the processed corn-pericarp product, the same amount of the said material obtained from corn that had not undergone high temperature and high pressure treatment was added to produce a similar fermented beverage in the same manner as a comparison product. In addition, sensory evaluations of the respective fermented beverages were conducted using 100 panelists selected at random, and evaluations on four scales of 0 (not feel) to 3 (strongly feel) were carried out for respective items of body, robustness, briskness, and beer taste, and the respective items were evaluated by the average value thereof. The results are shown in Table 6.

**(Table 6)**

| | | Fermented beverage | |
|---|---|---|---|
| | | Comparison product | Product of present invention |
| Sensory evaluation | Body | 0.9 | 2.1 |
| | Robustness | 1.1 | 1.9 |
| | Briskness | 1.5 | 2.1 |
| | Beer taste | 0.7 | 2.0 |

The sensory evaluations resulted in that the points of the evaluation items such as body and robustness were significantly improved in the products of the present invention as compared with the comparison product, and beer taste was further improved. For that reason, it is found that the product of the present invention is an excellent low-carbohydrate and low calorie beer-taste fermented beverage. Moreover, employing the processed corn-pericarp product added body and robustness to the non-malt fermented beverage, and gave an excellent beer taste to it.

### <Test Example 6 : Evaluation of beer using processed corn-pericarp product>

The processed corn-pericarp product (treated for 60 seconds at 190°C) obtained in the above Test Example 1 was used as a raw material to produce beer in a conventional method. That is, 3 kg of the processed corn-pericarp product was mixed into 27 kg of malt and the mixture was saccharified for one hour in 150 L of water at 65°C. After filtering the saccharified liquid, 100 g of hops was added and the mixture was boiled at 100°C for one hour. After cooling it to 12°C, 300 g of beer-brewing yeast was added to ferment the liquid at 12°C for two weeks, and beer was obtained. Moreover, beer using only malt as its raw material was produced in the same manner as above described as a comparison product. In addition, sensory evaluations of the respective fermented beverages were conducted using 100 panelists selected at random, and evaluations on four scales of 0 (not feel) to 3 (strongly feel) were carried out for respective items of body, robustness, briskness, and beer taste, and the respective items were evaluated by the average value thereof. The results are shown in Table 7.

**(Table 7)**

| | | Beer | |
|---|---|---|---|
| | | Comparison product | Product of present invention |
| Sensory evaluation | Body | 1.6 | 1.8 |
| | Robustness | 1.8 | 2.3 |
| | Briskness | 1.6 | 1.6 |

The sensory evaluations resulted in that the points of the evaluation items such as body and robustness were significantly improved in the products of the present invention as compared with the comparison product. Employing the processed corn-pericarp product added body and robustness to the beer, and gave an excellent beer flavor to it.

### INDUSTRIAL APPLICABILITY

The processed corn product and the composition containing a processed corn-pericarp product of the present invention can give an excellent flavor, body, and thickness to food or drink.

## Claims

1. A method for manufacturing a processed corn product, which is **characterized in that** corn or a material obtained from corn is treated with saturated steam of 170°C to 200°C under an oxygen concentration of 0 to 1 µg/mL.

2. The method according to claim 1, wherein the material obtained from corn contains corn pericarp.

3. The method according to claim 1 wherein the material obtained from corn is corn pericarp.

4. The method according to claim 1, wherein the material obtained from corn is a mixture of corn pericarp and corn grits.

5. The method according to claim 1, wherein the temperature of the saturated steam is 180°C to 200°C.

6. Food or drink which is obtainable by using the processed corn product obtainable by the method according to any one of claims 1 to 5 as a raw material.

7. A method for manufacturing a composition containing a processed corn-pericarp product, which is **characterized in that** corn pericarp or a mixture of corn pericarp and corn grits is treated with saturated steam of 170°C to 200°C under an oxygen concentration of 0 to 1 µg/mL and that the thus obtained product is compounded into corn or a material obtained from corn.

8. The method according to claim 7, wherein the corn or the material obtained from corn is cornstarch or a decomposed material thereof, corn protein or a decomposed material thereof, or corn grits.

9. Food or drink which is obtainable by using the composition containing a processed corn-pericarp product obtainable by the method according to claim 7 or 8.

10. The food or drink according to claim 6 or 9, wherein the food or drink is a grain brewed beverage.

11. The food or drink according to claim 10, wherein the grain brewed beverage is a non-malt fermented beverage.

12. The food or drink according to claim 6 or 9, wherein the food or drink is a beer-taste fermented beverage.

13. The food or drink according to claim 12, wherein the beer-taste fermented beverage is a low-carbohydrate or low-calorie beer-taste fermented beverage.

14. The food or drink according to claim 6 or 9, wherein the food or drink is a low-carbohydrate fermented beverage.

15. The food or drink according to claim 14, wherein the low-carbohydrate fermented beverage is a low-carbohydrate beer-taste fermented beverage.

16. A method for manufacturing a low-carbohydrate beer-taste fermented beverage, which is **characterized in that** a carbon source, a nitrogen source, and the processed corn product obtainable by the method according to any one of claims 1 to 7 and/or the composition containing a processed corn-pericarp product obtainable by the method according to claim 7 or 8 are added into water, and further hops or a processed product thereof is added and mixed, and then the obtained mixture is boiled to prepare a fermentation raw material liquid, and yeast is added to the fermentation raw material liquid, and fermentation is carried out to obtain a fermentation liquid, and the fermentation liquid is diluted by adding water.

17. The method according to claim 16, wherein the carbon source is a saccharide syrup and the nitrogen source is a corn-protein hydrolysate.

## Patentansprüche

1. Ein Verfahren zur Herstellung eines Produkts aus verarbeitetem Mais, welches **dadurch gekennzeichnet ist, dass** Mais oder ein aus Mais gewonnenes Material mit gesättigtem Dampf mit 170°C bis 200°C unter einer Sauerstoffkonzentration von 0 bis 1 µg/ml behandelt wird.

2. Das Verfahren nach Anspruch 1, wobei das aus Mais gewonnene Material Maisperikarp enthält.

3. Das Verfahren nach Anspruch 1, wobei es sich bei dem aus Mais gewonnenen Material um Maisperikarp handelt.

4. Das Verfahren nach Anspruch 1, wobei das aus Mais gewonnene Material ein Gemisch von Maisperikarp und Maisgrütze ist.

5. Das Verfahren nach Anspruch 1, wobei die Temperatur des gesättigten Dampfes 180°C bis 200°C beträgt.

6. Nahrungsmittel oder Getränk, welches unter Verwendung des Produkts aus verarbeitetem Mais, das durch das Verfahren nach einem der Ansprüche 1 bis 5 erhältlich ist, als Ausgangsmaterial erhältlich ist.

7. Ein Verfahren zur Herstellung einer Zusammensetzung, die ein Produkt aus verarbeitetem Maisperikarp enthält, wobei das Verfahren **dadurch gekennzeichnet ist, dass** Maisperikarp oder ein Gemisch von Maisperikarp und Maisgrütze mit gesättigtem Dampf mit 170°C bis 200°C unter einer Sauerstoffkonzentration von 0 bis 1 µg/ml behandelt wird, und dass das so erhaltene Produkt Mais oder einem aus Mais gewonnenen Material beigemischt wird.

8. Das Verfahren nach Anspruch 7, wobei der Mais oder das aus Mais gewonnene Material Maisstärke oder ein Zersetzungsprodukt davon, Maisprotein oder ein Zersetzungsprodukt davon oder Maisgrütze ist.

9. Nahrungsmittel oder Getränk, welches unter Verwendung der Zusammensetzung, die ein Produkt aus verarbeitetem Maisperikarp enthält, die durch das Verfahren nach Anspruch 7 oder 8 erhältlich ist, erhältlich ist.

10. Das Nahrungsmittel oder Getränk nach Anspruch 6 oder 9, wobei das Nahrungsmittel oder Getränk ein aus Getreide gebrautes Getränk ist.

11. Das Nahrungsmittel oder Getränk nach Anspruch 10, wobei das aus Getreide gebraute Getränk ein fermentiertes Nicht-Malzgetränk ist.

12. Das Nahrungsmittel oder Getränk nach Anspruch 6 oder 9, wobei das Nahrungsmittel oder Getränk ein fermentiertes Getränk mit Biergeschmack ist.

13. Das Nahrungsmittel oder Getränk nach Anspruch 12, wobei das fermentierte Getränk mit Biergeschmack ein kohlenhydrat- oder kalorienarmes fermentiertes Getränk mit Biergeschmack ist.

14. Das Nahrungsmittel oder Getränk nach Anspruch 6 oder 9, wobei das Nahrungsmittel oder Getränk ein kohlenhydratarmes fermentiertes Getränk ist.

15. Das Nahrungsmittel oder Getränk nach Anspruch 14, wobei das kohlenhydratarme fermentierte Getränk ein kohlenhydratarmes fermentiertes Getränk mit Biergeschmack ist.

16. Ein Verfahren zur Herstellung eines kohlenhydratarmen fermentierten Getränks mit Biergeschmack, welches **dadurch gekennzeichnet ist, dass** eine Kohlenstoffquelle, eine Stickstoffquelle und das Produkt aus verarbeitetem Mais, das durch das Verfahren nach einem der Ansprüche 1 bis 7 erhältlich ist, und/oder die Zusammensetzung, die ein Produkt aus verarbeitetem Maisperikarp enthält, die durch das Verfahren nach Anspruch 7 oder 8 erhältlich ist, zu Wasser hinzugefügt werden und weiter Hopfen oder ein Verarbeitungsprodukt davon zugegeben und gemischt wird, und das erhaltene Gemisch dann gesiedet wird, um eine Fermentationsausgangsmaterialflüssigkeit herzustellen, und Hefe der Fermentationsausgangsmaterialflüssigkeit zugegeben wird und Fermentation durchgeführt wird, um eine Fermentationsflüssigkeit zu erhalten, und die Fermentationsflüssigkeit durch Zugabe von Wasser verdünnt wird.

17. Das Verfahren nach Anspruch 16, wobei die Kohlenstoffquelle ein Saccharidsirup ist und die Stickstoffquelle ein Maisproteinhydrolysat ist.

## Revendications

1. Procédé de fabrication d'un produit de maïs traité, lequel est **caractérisé en ce que** le maïs ou une matière obtenue à partir du maïs est traité avec une vapeur saturée de 170°C à 200°C sous concentration d'oxygène de 0 à -1 µg/ml.

2. Procédé selon la revendication 1, dans lequel la matière obtenue à partir du maïs contient un péricarpe de maïs.

3. Procédé selon la revendication 1, dans lequel la matière obtenue à partir du maïs est le péricarpe du maïs.

4. Procédé selon la revendication 1, dans lequel la matière obtenue à partir du maïs est un mélange de péricarpe de maïs et de gruau de maïs.

5. Procédé selon la revendication 1, dans lequel la température de la vapeur saturée va de 180°C à 200°C.

6. Aliment ou boisson qui peut être obtenue en utilisant le produit de maïs traité qu'on peut obtenir par le procédé selon l'une quelconque des revendications 1 à 5 comme matière première.

7. Procédé de fabrication d'une composition contenant un produit de péricarpe de maïs traité, lequel est **caractérisé en ce que** le péricarpe de maïs ou un mélange de péricarpe de maïs et de gruau de maïs est traité avec de la vapeur saturée de 170°C à 200°C sous concentration d'oxygène de 0 à 1 µg/ml et que le produit ainsi obtenu est mélangé en maïs ou en matière obtenue à partir du maïs.

8. Procédé selon la revendication 7, dans lequel le maïs ou la matière obtenue à partir du maïs est de l'amidon de maïs ou une matière décomposée de celui-ci, de la protéine de maïs ou une matière décomposée de celle-ci ou du gruau de maïs.

9. Aliment ou boisson qu'on peut obtenir en utilisant la composition contenant un produit de péricarpe de maïs traité qu'on peut obtenir par le procédé selon la revendication 7 ou 8.

10. Aliment ou boisson selon la revendication 6 ou 9, dans lequel l'aliment ou la boisson est un breuvage brassé de grains.

11. Aliment ou boisson selon la revendication 10, dans lequel le breuvage brassé de grains est un breuvage fermenté non malté.

12. Aliment ou boisson selon la revendication 6 ou 9, dans lequel l'aliment ou la boisson est un breuvage fermenté au goût de bière.

13. Aliment ou boisson selon la revendication 12, dans lequel le breuvage fermé au goût de bière est un breuvage fermenté au goût de bière contenant peu d'hydrates de carbone ou peu de calories.

14. Aliment ou boisson selon la revendication 6 ou 9, dans lequel l'aliment ou la boisson est un breuvage fermenté contenant peu d'hydrates de carbone.

15. Aliment ou boisson selon la revendication 14, dans lequel le breuvage fermenté contenant peu d'hydrates de carbone est un breuvage fermenté contenant peu d'hydrates de carbone au goût de bière.

16. Procédé de fabrication d'un breuvage fermenté au goût de bière contenant peu d'hydrates de carbone, lequel est **caractérisé en ce qu'**on ajoute à de l'eau une source de carbone, une source d'azote et le produit de maïs traité qu'on peut obtenir par le procédé selon l'une quelconque des revendications 1 à 7 et/ou la composition contenant un produit de péricarpe de maïs traité qu'on peut obtenir par le procédé selon la revendication 7 ou 8, et ensuite on ajoute du houblon ou un produit traité de celui-ci et on mélange, puis on porte le mélange obtenu à ébullition pour préparer un liquide formant matière première de fermentation et on ajoute de la levure au liquide formant matière première de fermentation, et la fermentation s'opère pour obtenir un liquide de fermentation et on dilue le liquide de fermentation en ajoutant de l'eau.

17. Procédé selon la revendication 16, dans lequel la source de carbone est un sirop de saccharide et la source d'azote est un hydrolysat de protéine de maïs.
